# EUROPEAN PATENT APPLICATION

(11) **EP 3 163 503 A1**
(43) Date of publication of application: **03.05.2017**
(21) Application number: 16195105.8
(22) Date of filing: 21.10.2016
(51) Int. Cl.: G06K 9/00, G06K 9/46, G06K 9/62

(54) **METHOD AND APPARATUS FOR AREA INDENTIFICATION**

(30) Priority: 30.10.2015 CN 201510726012
(71) Applicant: Xiaomi Inc., Beijing 100085 (CN)
(72) Inventor: LONG, Fei, BEIJING, 100085 (CN); ZHANG, Tao, BEIJING, 100085 (CN); CHEN, Zhijun, BEIJING, 100085 (CN)
(74) Representative: Orian, Yvette Suzanne

(57) **Abstract**

Method and apparatus for area identification are provided in the invention, which belongs to the technical field of image processing. The method may comprise: identifying (102) *n* predefined edge candidates each corresponding to a predefined edge in an image of an identification, wherein the predefined edge is an edge positioned on a predefined direction of the identification and *n≥*2; determining (104) one of *n* predefined edge candidates to be a target predefined edge when the *n* predefined edge candidates have been identified; identifying (106) at least one information area in the image of the identification based on the target predefined edge. Problems in the related arts wherein it is difficult to identify some information areas in the image of the identification obtained directly by photographing and that the positions of some information areas are inaccurate can be solved, and positioning the information areas accurately can be achieved.

## Description

### FIELD

The present invention generally relates to image processing, and more particularly to a method and an apparatus for area identification.

### BACKGROUND

Automatic identification of an identity card is a technology for identifying character (text) information on the identity card by image processing.

Related technology provides a method for automatic identification of an identity card. Known methods involve: scanning the identity card by an identity card scanning device in a fixed relative position to obtain a scanned image of the identity card; performing a character recognition on the characters of predefined n areas in the scanned image to obtain information about at least one of name, gender, nationality, date of birth, address and civil identity number. However, it is difficult to identify the image of the identity card obtained directly by photographing.

### SUMMARY

In view of the problems in the related arts, a method and apparatus for area identification are provided in the invention.

According to a first aspect, the invention relates to a method for area identification, comprising: identifying *n* predefined edge candidates each corresponding to a predefined edge in an image of an identification, wherein the predefined edge is an edge positioned on a predefined direction of the identification and *n*≥2; determining one of the *n* predefined edge candidates to be a target predefined edge when the n predefined edge candidates have been identified; identifying at least one information area in the image of the identification based on the target predefined edge.

An identification may be an identification document, such as an identity card, a social security card and the like.

The image of the identification may be an image obtained directly by photographing the identification.

In a particular embodiment, determining one of the *n* predefined edge candidates to be the target predefined edge when the *n* predefined edge candidates have been identified comprises: sorting the *n* predefined edge candidates; attempting to identify a target information area in the image of the identification using the *i^{th}* predefined edge candidate and a first relative position relation, wherein 1*≤i*≤*n,* and wherein the first relative position relation is a relative position relation between the target predefined edge and the target information area; determining the *i^{th}* predefined edge candidate to be the target predefined edge if the target information area is successfully identified; setting *i=i*+1 and repeating the step of attempting to identify the target information area in the image of the identification using the *i^{th}* predefined edge candidate and the first relative position relation if the target information area is not identified.

In an particular embodiment, the step of sorting the *n* predefined edge candidates comprises: intersecting the predefined edge with pixel points of foreground color at the same position in the processed image of the identification for each predefined edge candidate, to obtain the number of corresponding intersection points of the predefined edge, wherein the processed image of the identification is an image having been filtered horizontally by Sobel filter and binarized; sorting the *n* predefined edge candidates based on the number of intersection points in a descending order.

In a particular embodiment, the step of attempting to identify the target information area in the image of the identification using the *i^{th}* predefined edge candidate and the first relative position relation comprises: cropping an area of interest in the image of the identification using the *i^{th}* predefined edge candidate and the first relative position relation; identifying whether there is a character area satisfying predefined characteristics in the area of interest, wherein the predefined characteristics are the characteristics possessed by the character area in the target information area.

In a particular embodiment, the step of identifying whether there is a character area satisfying predefined characteristics in the area of interest comprises: binarizing the area of interest to obtain the binarized area of interest; calculating a first histogram of the binarized area of interest on horizontal direction, wherein the first histogram comprises the vertical coordinate of the pixel points of each row and the number of pixel points of the foreground color in the pixel points of each row; calculating a second histogram of the binarized area of interest on vertical direction, wherein the second histogram comprises the horizontal coordinate of the pixel points of each column and the number of pixel points of the foreground color in the pixel points of each column; wherein if the height of the set of consecutive rows composed of the rows of which the numbers of pixel points of the foreground color in the first histogram are greater than a first threshold satisfies a predefined height range, and the number of the sets of consecutive columns composed of the columns of which the numbers of pixel points of the foreground color in the second histogram are greater than a second threshold satisfies a predefined number, the character area satisfying predefined characteristics is identified successfully in the area of interest; if the height of the set of consecutive rows composed of the rows of which the numbers of pixel points of the foreground color in the first histogram are greater than the first threshold does not satisfy the predefined height range, and the number of the sets of consecutive columns composed of the columns of which the numbers of pixel points of the foreground color in the second histogram are greater than the second threshold does not satisfy the predefined number, the character area satisfying predefined characteristics is not identified in the area of interest.

In a particular embodiment, the step of identifying *n* predefined edge candidates each corresponding to the predefined edge in the image of the identification comprises: filtering the image of the identification horizontally by Sobel filter and binarizing the image of the identification to obtain the processed image of the identification; conducting line detection for a predefined area in the processed image of the identification to obtain at least one line; identifying *n* lines to be the *n* predefined edge candidates when the *n* lines are obtained, wherein *n*≥2.

In a particular embodiment, the step of identifying at least one information area in the image of the identification based on the target predefined edge comprises: determining at least one information area based on the target predefined edge and a second relative position relation, wherein the second relative position relation is a relative position relation between the target predefined edge and the information area.

According to a second aspect , the invention relates to an apparatus for area identification, comprising: an identification module configured to identify *n* predefined edge candidates each corresponding to a predefined edge in an image of an identification, wherein the predefined edge is an edge positioned on a predefined direction of the identification and *n≥*2; a determination module configured to determine one of *n* predefined edge candidates to be a target predefined edge when the *n* predefined edge candidates have been identified; an area identification module configured to identify at least one information area in the image of the identification based on the target predefined edge.

In a particular embodiment, the determination module comprises: a first sorting sub-module configured to sort the *n* predefined edge candidates; a first identification sub-module configured to try to identify a target information area in the image of the identification using the *i^{th}* predefined edge candidate and a first relative position relation, wherein 1≤*i*≤*n,* and wherein the first relative position relation is a relative position relation between the target predefined edge and the target information area; a second identification sub-module configured to determine the *i^{th}* predefined edge candidate to be the target predefined edge if the target information area is successfully identified; a third identification sub-module configured to set *i=i*+1 and return to the first identification sub-module if the target information area is not identified.

In a particular embodiment, the first sorting sub-module comprises: an intersection sub-module configured to intersect the predefined edge with pixel points of foreground color at the same position in the processed image of the identification for each predefined edge candidate, to obtain the number of corresponding intersection points of the predefined edge, wherein the processed image of the identification is an image having been filtered horizontally by Sobel filter and binarized; a second sorting sub-module configured to sort the n predefined edge candidates based on the number of intersection points in a descending order.

In a particular embodiment, the first identification sub-module comprises: a cropping sub-module configured to crop an area of interest in the image of the identification using the *i^{th}* predefined edge candidate and the first relative position relation; a fourth identification sub-module configured to identify whether there is a character area satisfying predefined characteristics in the area of interest, wherein the predefined characteristics are the characteristics possessed by the character area in the target information area.

In a particular embodiment, the fourth identification sub-module comprises: a binarization sub-module configured to binarize the area of interest to obtain the binarized area of interest; a first calculation sub-module configured to calculate a first histogram of the binarized area of interest on horizontal direction, wherein the first histogram comprises the vertical coordinate of the pixel points of each row and the number of pixel points of the foreground color in the pixel points of each row; a second calculation sub-module configured to calculate a second histogram of the binarized area of interest on vertical direction, wherein the second histogram comprises the horizontal coordinate of the pixel points of each column and the number of pixel points of the foreground color in the pixel points of each column; a character identification sub-module configured to successfully identify the character area satisfying predefined characteristics in the area of interest if the height of the set of consecutive rows composed of the rows of which the numbers of pixel points of the foreground color in the first histogram are greater than a first threshold satisfies a predefined height range, and the number of the sets of consecutive columns composed of the columns of which the numbers of pixel points of the foreground color in the second histogram are greater than a second threshold satisfies a predefined number; a fifth identification sub-module configured not to identify the character area satisfying predefined characteristics in the area of interest if the height of the set of consecutive rows composed of the rows of which the numbers of pixel points of the foreground color in the first histogram are greater than the first threshold does not satisfy the predefined height range, or the number of the sets of consecutive columns composed of the columns of which the numbers of pixel points of the foreground color in the second histogram are greater than the second threshold does not satisfy the predefined number.

In a particular embodiment, the identification module comprises: a filter sub-module configured to filter the image of the identification horizontally by Sobel filter and binarize the image of the identification to obtain the processed image of the identification; a detection sub-module configured to conduct line detection for a predefined area in the processed image of the identification to obtain at least one line; an edge identification sub-module configured to identify *n* lines to be *n* predefined edge candidates when the *n* lines are obtained, wherein *n*≥2.

In a particular embodiment, the area identification module is configured to determine at least one information area based on the target predefined edge and a second relative position relation, wherein the second relative position relation is a relative position relation between the target predefined edge and the information area.

According to a third aspect , the invention relates to an apparatus for area identification, comprising: a processor; a memory for storing instructions executable by the processor; wherein the processor is configured to: identify *n* predefined edge candidates each corresponding to a predefined edge in an image of an identification, wherein the predefined edge is an edge positioned on an predefined direction of the identification and *n*≥2; determine one of *n* predefined edge candidates to be a target predefined edge when the n predefined edge candidates have been identified; and identify at least one information area in the image of the identification based on the target predefined edge.

In one particular embodiment, the steps of the above method for area identification are determined by computer program instructions.

Consequently, according to a fourth aspect, the invention is also directed to a computer program for executing the steps of a method for area identification as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the information medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Embodiments of the invention may provide at least some of the following beneficial effects: problems in the related arts wherein it is difficult to identify some information areas in the image of the identification obtained directly by photographing and that the positions of some information areas are inaccurate are solved. By determining the target predefined edge based on the *n* predefined edge candidates in the image of the identification and determining at least one information area based on the target predefined edge, the information areas can be accurately positioned.

It is to be understood that both the forgoing general description and the following detailed description are exemplary only, and are not restrictive of the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for area identification according to an exemplary embodiment.
Fig. 2 is a flow diagram illustrating a method for area identification according to another exemplary embodiment.
Fig. 3A is a flow diagram illustrating a method for area identification according to another exemplary embodiment.
Fig. 3B is a schematic diagram illustrating the binarization of the image of the identification according to an exemplary embodiment.
Fig. 3C is a schematic diagram illustrating the straight line detection in the image of the identification according to an exemplary embodiment.
Fig. 3D is a schematic diagram illustrating the n predefined edge candidates in the image of the identification according to an exemplary embodiment.
Fig. 4 is a flow diagram illustrating a method for area identification according to another exemplary embodiment.
Fig. 5A is a flow diagram illustrating a method for area identification according to another exemplary embodiment.
Fig. 5B is a schematic diagram illustrating the determination of the target information area according to an exemplary embodiment.
Fig. 6A is a flow diagram illustrating a method for area identification according to another exemplary embodiment.
Fig. 6B is a schematic diagram illustrating the calculation of a first histogram in a horizontal direction according to an exemplary embodiment.
Fig. 6C is a schematic diagram illustrating the calculation of a second histogram in a vertical direction according to an exemplary embodiment.
Fig. 6D is a schematic diagram illustrating a set of consecutive rows according to an exemplary embodiment.
Fig. 6E is a schematic diagram illustrating a set of consecutive columns according to an exemplary embodiment.
Fig. 7 is a flow diagram illustrating a method for area identification according to another exemplary embodiment.
Fig. 8 is a block diagram illustrating a device for area identification according to an exemplary embodiment.
Fig. 9 is a block diagram illustrating a device for area identification according to another exemplary embodiment.
Fig. 10 is a block diagram illustrating a device for area identification according to another exemplary embodiment.
Fig. 11A is a block diagram illustrating a first sorting sub-module in the device for area identification according to an exemplary embodiment.
Fig. 11B is a block diagram illustrating a first identification sub-module in the device for area identification according to an exemplary embodiment.
Fig. 12 is a block diagram illustrating a fourth identification sub-module in the device for area identification according to an exemplary embodiment.
Fig. 13 is a block diagram illustrating a device for area identification according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of apparatuses and methods consistent with aspects related to the invention as recited in the appended claims.

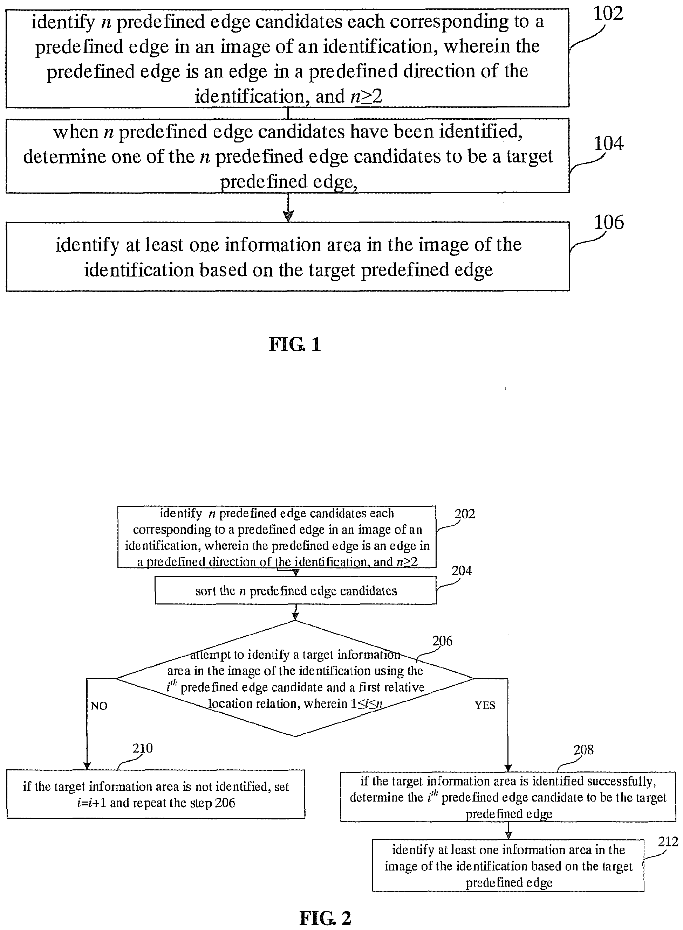

Fig. 1 is a flow diagram illustrating a method for area identification according to an exemplary embodiment. As illustrated in Fig. 1, the method for area identification may comprise the following steps.

In step 102, n predefined edge candidates each corresponding to a predefined edge are identified in an image of an identification, wherein the predefined edge is an edge in a predefined direction of the identification and *n*≥2.

The image of the identification may be an image obtained directly by photographing the identification, such as an image of an identity card, an image of a social security card and the like.

The predefined edge may be any one of upper edge, lower edge, left edge and right edge of the identification. In embodiments of the present invention, the lower edge is taken for example and the situations in which the predefined edge is upper edge, left edge or right edge will not be described.

In step 104, when *n* predefined edge candidates have been identified, one of the *n* predefined edge candidates is determined to be a target predefined edge.

Because photographing effect of the image of the identification is influenced by multiple factors such as angle of photographing, background, light condition and parameters of photographing, more than one predefined edges (i.e., *n* predefined edge candidates) may be identified.

When *n*≥2, one of the *n* predefined edge candidates is determined to be a target predefined edge of the identification in the image of the identification.

The target predefined edge can be regarded as the real predefined edge, the correct predefined edge or the predefined edge of high accuracy.

In step 106, at least one information area in the image of the identification is identified based on the target predefined edge.

The position of the target predefined edge in the image of the identification is relatively fixed; therefore, the respective information areas on the identification can be determined in the image of the identification based on the target predefined edge.

The information area refers to the area carrying character information in the image of the identification, such as at least one of name information area, date of birth information area, gender information area, address information area, civil identity number information area, serial number information area, issuance office of the identification information area, valid date information area and the like.

In summary, in the method for area identification according to the embodiment of the invention, *n* predefined edge candidates each corresponding to a predefined edge in an image of an identification are identified, wherein the predefined edge is an edge positioned on a predefined direction of the identification and *n≥*2; one of the *n* predefined edge candidates is determined to be a target predefined edge when the *n* predefined edge candidates have been identified; and at least one information area in the image of the identification is identified based on the target predefined edge. The problems in the related arts wherein it is difficult to identify some information areas in the image of the identification obtained directly by photographing and that the positions of some information areas are inaccurate can be solved. By determining the target predefined edge based on the *n* predefined edge candidates in the image of the identification and determining at least one information area based on the target predefined edge, the information areas can be accurately positioned.

Fig. 2 is a flow diagram illustrating a method for area identification according to another exemplary embodiment. As illustrated in Fig. 2, the method for area identification may comprise the following steps.

In step 202, *n* predefined edge candidates each corresponding to a predefined edge are identified in an image of an identification, wherein the predefined edge is an edge in a predefined direction of the identification and *n≥*2.

Optionally, when photographing the identification, a rectangular region may be provided in a photographing interface for guiding the photographing. A user can photograph the identification to obtain the image of the identification while aligning the rectangular region to the identification.

Optionally, the *n* predefined edge candidates each corresponding to a predefined edge of the identification in the image of the identification may be identified through straight line detection technology based on the obtained image of the identification by photographing, wherein *n*≥2.

When only one predefined edge of the identification is identified in the image of the identification through the straight line detection technology, the identified predefined edge is determined to be the target predefined edge of the identification in the image of the identification, and the flow proceeds to step 212.

When through the straight line detection technology *n* predefined edges (candidates) of the identification in the image of the identification are identified due to factors such as the angle of photographing, background, light condition and parameters of photographing, the flow proceeds to step 204 to step 210 to process the *n* predefined edge candidates.

In step 204, the *n* predefined edge candidates are sorted.

Upon being obtained, the *n* predefined edge candidates may be sorted based on the possibility that the respective predefined edge candidate is the target predefined edge in a descending order.

In step 206, it may be attempted to identify a target information area in the image of the identification using the *i^{th}* predefined edge candidate and a first relative position relation, wherein 1≤i≤*n*.

The difficulty to identify the target information area is usually low. In this step, assuming the *i^{th}* predefined edge candidate is the target predefined edge, the *i^{th}* predefined edge candidate is used to attempt to identify the target information area. If the target information area is identified successfully, the *i^{th}* predefined edge candidate is determined to be the target predefined edge; however if the target information area is not identified, the *i^{th}* predefined edge candidate is determined not to be the target predefined edge.

In the step that assuming the *i^{th}* predefined edge candidate is the target predefined edge, the *i^{th}* predefined edge candidate is used to attempt to identify the target information area, the predefined edges sorted in step 204 are tried one by one.

The first relative position relation is a relative position relation between the target predefined edge and the target information area.

In step 208, if the target information area is identified successfully, the *i^{th}* predefined edge candidate is determined to be the target predefined edge.

If the target information area is identified successfully in the image of the identification based on the *i^{th}* predefined edge candidate and the first relative position relation, the *i^{th}* predefined edge candidate is determined to be the target predefined edge.

In step 210, if the target information area is not identified, *i* is increased by 1 and the method returns to step 206.

If the target information area is not identified in the image of the identification based on the *i^{th}* predefined edge candidate and the first relative position relation, *i* is set to *i*+1 and the (*i*+1)^{th} predefined edge candidate is determined to be the target predefined edge or not. It is attempted to identify the target information area in the image of the identification using the (*i*+1)^{th} predefined edge candidate and the first relative position relation.

In step 212, at least one information area in the image of the identification is identified based on the target predefined edge.

The at least one information area is determined based on the target predefined edge determined in step 208 and a second relative position relation.

The information area may include: name information area, date of birth information area, gender information area, address information area, civil identity number information area, serial number information area, issuance office of the identification information area, valid date information area and the like.

The second relative position relation is a relative position relation between the target predefined edge and the information area. The first relative position relation is a subset of the second relative position relation.

For example, the second relative position relation may include: the relative position relation between the target predefined edge and the name information area, the relative position relation between the target predefined edge and the date of birth information area, or the relative position relation between the target predefined edge and the gender information area and so on.

In summary, in the method for area identification according to the embodiment of the invention, *n* predefined edge candidates each corresponding to a predefined edge are identified in an image of an identification, wherein the predefined edge is an edge positioned on a predefined direction of the identification and *n*≥2; the *n* predefined edge candidates are sorted; a target information area is attempted to identify in the image of the identification using the *i^{th}* predefined edge candidate and a first relative position relation, wherein 1≤*i*≤n, and wherein the first relative position relation is a relative position relation between the target predefined edge and the target information area; and at least one information area is identified in the image of the identification based on the target predefined edge. Problems in the related arts wherein it is difficult to identify some information areas in the image of the identification obtained directly by photographing and that the positions of some information areas are inaccurate can be solved. By determining the target predefined edge based on the *n* predefined edge candidates in the image of the identification and determining at least one information are based on the target predefined edge, the information areas can be accurately positioned.

Meanwhile, by sorting the *n* predefined edge candidates, the effect of increasing the speed of determining the target predefined edge and accurately positioning the target predefined edge can be achieved.

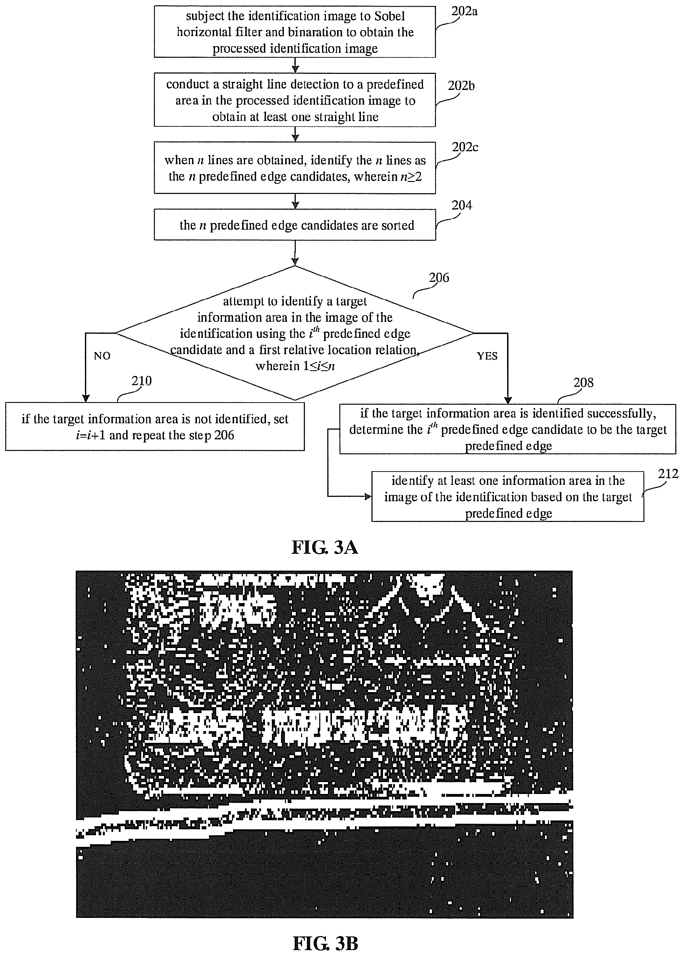

In a particular embodiment based on the embodiment as shown in Fig. 2, identifying the *n* predefined edge candidates each corresponding to a predefined edge in the image of the identification in step 202 may be implemented through the following steps 202a to 202c, as shown in Fig. 3A.

In step 202a, the image of the identification is subjected to Sobel horizontal filter and binarization to obtain a processed image of the identification.

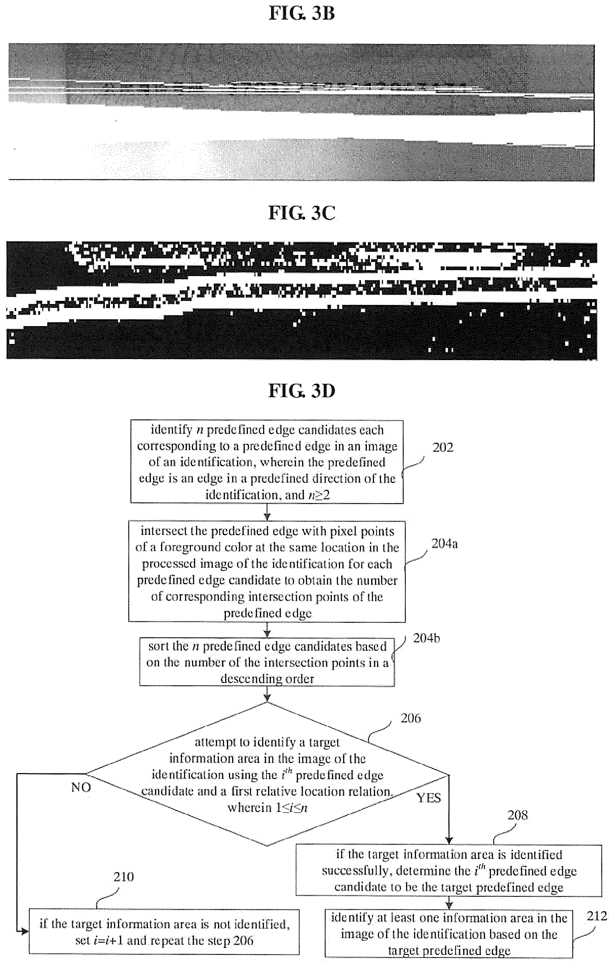

Firstly, the image of the identification is subjected to Sobel horizontal filter, that is to say, filtered with a Sobel operator in a horizontal direction. Then, the filtered image of the identification is binarized. The binarization refers to comparing the gray values of the pixel points in the image of the identification with a predefined gray threshold to divide the pixel points in the image of the identification into two groups: a group of pixel points whose gray values are greater than the predefined gray threshold and a group of pixel points whose gray values are lower than the predefined gray threshold. The two groups of pixel points are presented with two different colors of black and white in the image of the identification, thus obtaining the binarized image of the identification, as shown in Fig. 3B. The pixel points in the color of foreground are referred as the pixel points of foreground color, i.e., the white pixel points of Fig. 3B, and the pixel points in the color of background are referred as the pixel points of background color, i.e., the black pixel points of Fig. 3B.

In step 202b, a straight line detection is conducted to a predefined area in the processed image of the identification to obtain at least one straight line.

The predefined area is an area positioned in a predefined direction of the identification. For example, the predefined area may be an area of the lower edge of the identification in the image of the identification, or the predefined area may be the area of the upper edge of the identification in the image of the identification and so on.

After obtaining the processed image of the identification, the straight line detection, including straight line fitting or Hough transformation, is conducted to the processed image of the identification so as to obtain at least one straight line, as shown in Fig. 3C.

In step 202c, when *n* lines are obtained, the *n* lines are identified as the *n* predefined edge candidates, wherein *n*≥2.

For example, for the processed image of the identification, the straight line detection is conducted to the area of the lower edge of the identification in the image of the identification. By straight line fitting or Hough transformation, the *n* predefined edge candidates can be obtained, then the area of the *n* candidates of the lower edge of the identification in the binarized image of the identification are as shown in Fig. 3D.

When only one straight line is obtained, this line is identified to be the target predefined edge in the image of the identification, and the flow proceeds to step 212.

In summary, in the method for area identification according to the embodiment of the invention, the image of the identification is subjected to Sobel horizontal filter and binarization to obtain the processed image of the identification; a straight line detection is conducted to a predefined area in the processed image of the identification to obtain at least one straight line; *n* lines are identified to be the *n* predefined edge candidates. As a result, the detection of the target predefined edge in the image of the identification is more accurate and the accuracy of later identification for the information area can be improved.

In a particular embodiment based on the embodiment as shown in Fig. 2, sorting the *n* predefined edge candidates in step 204 can be implemented by the following steps 204a and 204b, as shown in Fig. 4.

In step 204a, each of the predefined edge candidates is intersected with pixel points of the foreground color at the same position in the processed image of the identification to obtain a number of intersection points corresponding to the predefined edge candidate, wherein the processed image of the identification is the image subjected to Sobel horizontal filter and binarization.

After obtaining the *n* predefined edge candidates, the image of the identification is horizontally filtered by Sobel filter firstly, that is to say, the image of the identification is filtered with a Sobel operator in the horizontal direction. Then, the filtered image of the identification is binarized.

Each of the predefined edge candidates is intersected with the pixel points of the foreground color at the same position in the processed image of the identification. That is, the pixel points of each predefined edge candidate, which are in the foreground color at the same positions in the binarized image of the identification, are counted.

In step 204b, the *n* predefined edge candidates are sorted based on the number of the intersection points in a descending order.

Upon obtaining the number of the corresponding intersection points for each predefined edge candidate, the *n* predefined edge candidates are sorted based on the number of the intersection points in a descending order to obtain the *n* sorted predefined edge candidates.

In summary, in the method for area identification according to the embodiment of the invention, by sorting the *n* predefined edge candidates, the speed of determining the target predefined edge can be increased, the accurate positioning of the target predefined edge can be facilitated and the accuracy of later identification for the information area can be improved.

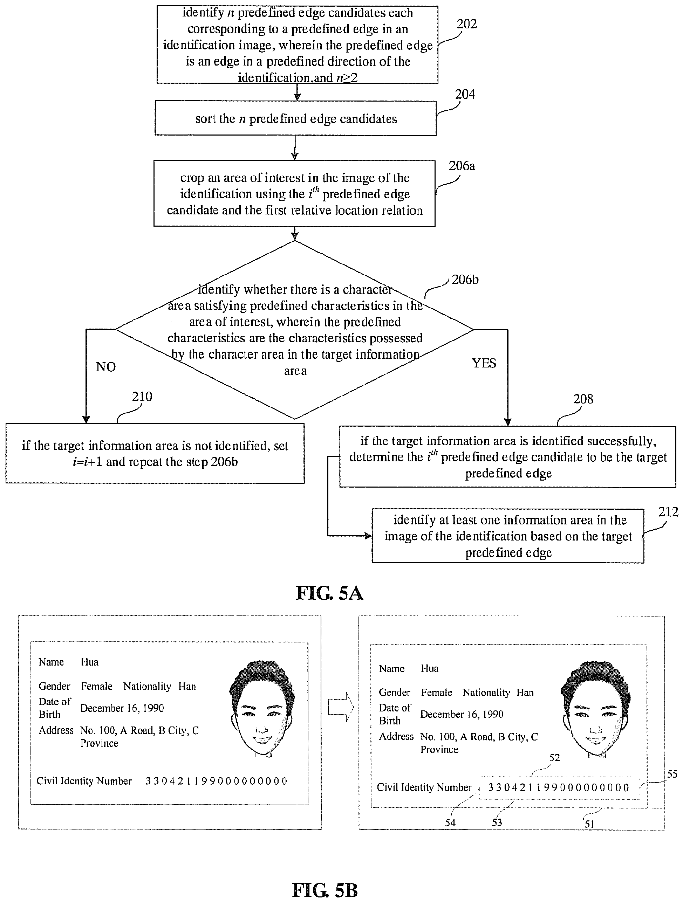

In a particular embodiment based on the embodiment as shown in Fig. 2, attempting to identify the target information area in the image of the identification using the *i^{th}* predefined edge candidate and the first relative position relation in step 206 can be implemented by the following steps 206a and 206b, as shown in Fig. 5A.

In step 206a, an area of interest is cropped in the image of the identification using the *i^{th}* predefined edge candidate and the first relative position relation.

Based on the *i^{th}* predefined edge candidate and the first relative position relation, the rough positions of the upper edge, lower edge, left edge and right edge of the area of interest can be determined. Therefore, the area of interest can be cropped in the image of the identification based on the determined upper edge, lower edge, left edge and right edge of the area of interest.

Taking the target predefined edge being the lower edge of an identity card as an example, the *i^{th}* predefined edge candidate in Fig. 3C is determined to be the lower edge of the identity card 51. Based on the relative position relation between the lower edge of the identity card 51 and the civil identity number, the rough positions of the upper edge 52, lower edge 53, left edge 54 and right edge 55 of the civil identity number can be determined as shown in Fig. 5B.

The area of interest refers to an area determined based on the *i^{th}* predefined edge candidate and the first relative position relation.

In step 206b, it is identified whether there is a character area satisfying predefined characteristics in the area of interest, wherein the predefined characteristics are the characteristics possessed by the character area in the target information area.

After cropping the area of interest, it is identified whether there is a character area satisfying predefined characteristics in the area of interest based on the predefined characteristics.

The predefined characteristics are the characteristics possessed by the character area in the target information area. For example, the target information area may be the civil identity number information area. The characteristics may be: containing 18 consecutive character areas (or 18 number areas), small character space between two adjacent character areas, and the height of each character area being in a predefined range.

When it is identified that there is a character area satisfying the predefined characteristics in the area of interest, the target information area is identified successfully.

When it is identified that there is no character area satisfying the predefined characteristics in the area of interest, the target information area is not identified.

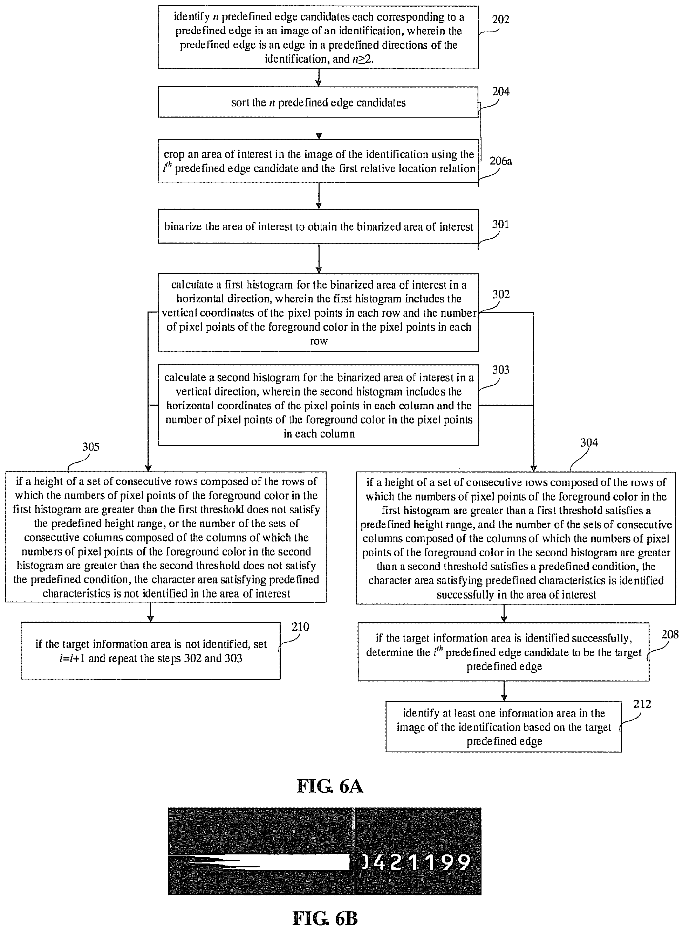

In a particular embodiment, identifying whether there is a character area satisfying predefined characteristics in the area of interest in step 206b can be implemented by the following steps 301 to 305, as shown in Fig. 6A.

In step 301, the area of interest is binarized to obtain a binarized area of interest.

Taking the area of interest being the civil identity number area as an example, the area of interest may be optionally pre-processed. The pre-process may include operations such as de-noising, filtering, edges extraction and so on. The pre-processed area of interest may be binarized.

In step 302, a first histogram for the binarized area of interest is calculated in a horizontal direction, wherein the first histogram comprises vertical coordinates of the pixel points in each row and the number of pixel points of the foreground color in the pixel points in each row.

The first histogram for the binarized area of interest is calculated in the horizontal direction, wherein the first histogram represents the vertical coordinates of the pixel points in each row on the vertical direction and the number of pixel points of the foreground color in the pixel points in each row on the horizontal direction. The pixel points of the foreground color are the white pixel points in the binarized image, as shown in Fig. 6B.

In step 303, a second histogram for the binarized area of interest is calculated in a vertical direction, wherein the second histogram comprises horizontal coordinates of the pixel points in each column and the number of pixel points of the foreground color in the pixel points in each column.

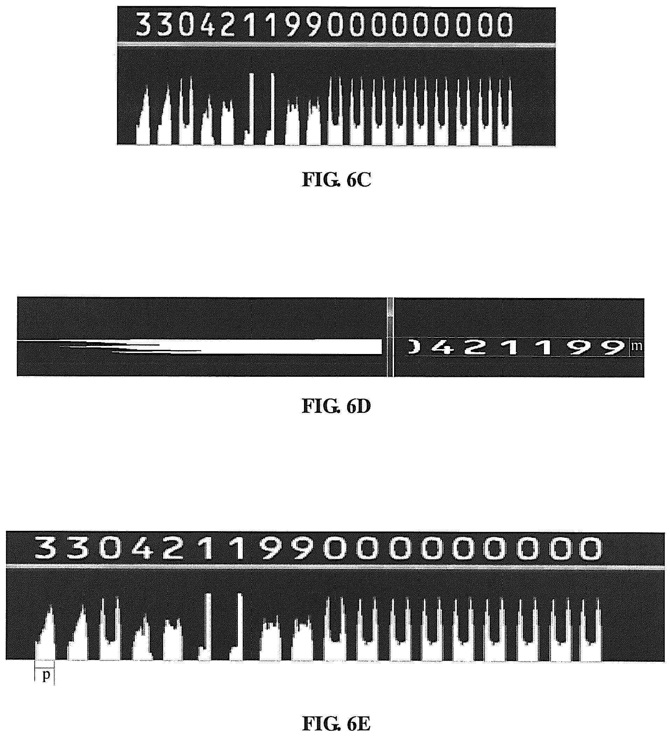

The second histogram for the binarized area of interest is calculated in the vertical direction, wherein the second histogram represents the horizontal coordinates of the pixel points in each column on the horizontal direction and the number of pixel points of the foreground color in the pixel points in each column on the vertical direction, as shown in Fig. 6C.

In step 304, if a height of a set of consecutive rows composed of the rows of which the numbers of pixel points of the foreground color in the first histogram are greater than a first threshold satisfies a predefined height range, and the number of the sets of consecutive columns composed of the columns of which the numbers of pixel points of the foreground color in the second histogram are greater than a second threshold satisfies a predefined number, the character area satisfying predefined characteristics is identified successfully in the area of interest.

The number of pixel points of the foreground color in the pixel points in each row can be obtained based on the first histogram. By comparing the number of pixel points of the foreground color in the pixel points in each row with the first threshold, the height of the set of consecutive rows composed of the rows, of which the numbers of pixel points of the foreground color in the first histogram are greater than the first threshold, can be obtained.

The set of consecutive rows refers to a set of *m* consecutive rows of pixel points if the numbers of pixel points of the foreground color in the *m* rows are each greater than the first threshold. As shown in Fig. 6D, for each of the *m* consecutive rows of pixel points in Fig. 6D, the number of pixel points of the foreground color in the left histogram is greater than the first threshold. The *m* consecutive rows of pixel points correspond to the row of civil identity number "0421299" in the image of the identification. The height of the m consecutive rows of pixel points is thus the height of the set of consecutive rows.

The number of pixel points of the foreground color in the pixel points in each column can be obtained based on the second histogram. By comparing the number of pixel points of the foreground color in the pixel points in each column with the second threshold, the number of the sets of consecutive columns composed of the columns of which the numbers of pixel points of the foreground color in the second histogram are greater than the second threshold can be obtained.

The set of consecutive columns refers to a set of *p* consecutive columns of pixel points if the numbers of pixel points of the foreground color in the *p* columns are each greater than the second threshold. As shown in Fig. 6E, the set of consecutive columns is represented by "p", i.e., the consecutive white area formed in the second histogram. For each of the *p* consecutive columns of pixel points in Fig. 6E, the number of pixel points of the foreground color in the lower histogram is greater than the second threshold. The *p* consecutive columns of pixel points correspond to the character area "3" in the image of the identification.

When the height of the set of consecutive rows satisfies a predefined height range, and the number of the sets of consecutive columns satisfies a predefined condition, it is determined that the character area satisfying predefined characteristics is identified successfully in the area of interest.

In step 305, if the height of the set of consecutive rows composed of the rows of which the numbers of pixel points of the foreground color in the first histogram are greater than the first threshold does not satisfy the predefined height range, or the number of the sets of consecutive columns composed of the columns of which the numbers of pixel points of the foreground color in the second histogram are greater than the second threshold does not satisfy the predefined condition, it is determined that the character area satisfying predefined characteristics is not identified in the area of interest.

When the height of the set of consecutive rows does not satisfy the predefined height range, or the number of the sets of consecutive columns does not satisfy the predefined condition, the character area satisfying predefined characteristics is not identified in the area of interest.

In summary, in the method for area identification according to the embodiment of the invention, by binarizing the area of interest, calculating a first histogram and a second histogram of the binarized area of interest in a horizontal direction and a vertical direction respectively, and determining whether the character area satisfying predefined characteristics is identified based on the height of the set of consecutive rows in the first histogram and the number of the sets of consecutive columns in the second histogram, the positioning of the character area can be more accurate.

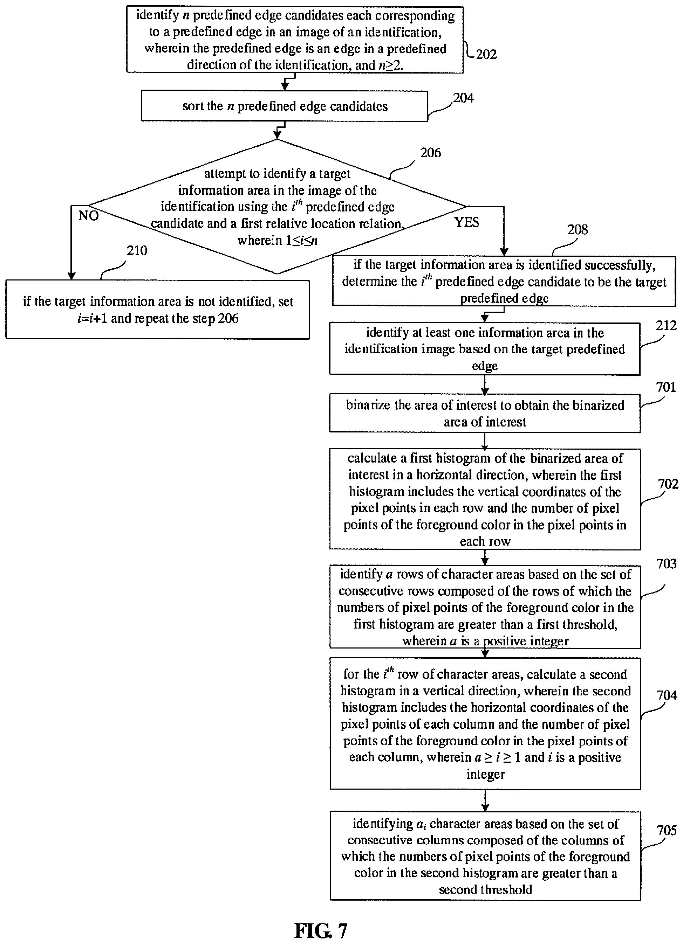

In a particular embodiment based on the embodiment as shown in Fig. 2, after identifying at least one information area in the image of the identification based on the target predefined edge, the characters in the information area can be identified based on the following steps, as shown in Fig. 7.

In step 701, the information area of interest is binarized to obtain the binarized area of interest.

Taking the area of interest being the civil identity number area as an example, the area of interest may be pre-processed. The pre-process may include operations such as de-noising, filtering, edges extraction and so on. The pre-processed area of interest may be binarized.

In step 702, a first histogram of the binarized area of interest is calculated in a horizontal direction, wherein the first histogram comprises the vertical coordinates of the pixel points in each row and the number of pixel points of the foreground color in the pixel points in each row.

In step 703, *a* rows of character areas are identified based on the set of consecutive rows composed of the rows of which the numbers of pixel points of the foreground color in the first histogram are greater than a first threshold, wherein *a* is a positive integer.

The number of pixel points of the foreground color in the pixel points of each row can be obtained based on the first histogram. By comparing the number of pixel points of the foreground color in the pixel points of each row with the first threshold, the set of consecutive rows composed of the rows of which the numbers of pixel points of the foreground color in the first histogram are greater than the first threshold is determined to be the row in which the character area is positioned.

When the information area is the address information area or other information areas, the character area may contain two or more rows. In this case, each set of consecutive rows may be identified to be a row of character areas and *a* sets of consecutive rows are identified to be *a* rows of character areas.

In step 704, for the *i^{th}* row of character areas, a second histogram is calculated in a vertical direction, wherein the second histogram comprises the horizontal coordinates of the pixel points of each column and the number of pixel points of the foreground color in the pixel points of each column, wherein *a ≥ i ≥* 1 and *i* is a positive integer.

For the identified row of the civil identity number, the second histogram is calculated in a vertical direction, wherein the second histogram represents the horizontal coordinate of the pixel points of each column on horizontal direction, and the number of pixel points of the foreground color in the pixel points of each column in the vertical direction.

In step 705, *aᵢ* character areas are identified based on the set of consecutive columns composed of the columns of which the numbers of pixel points of the foreground color in the second histogram are greater than a second threshold.

The number of pixel points of the foreground color in the pixel points of each column can be obtained based on the second histogram. By comparing the number of pixel points of the foreground color in the pixel points of each column with the second threshold, the set of consecutive columns composed of the columns of which the numbers of pixel points of the foreground color in the second histogram are greater than the second threshold can be determined to be the column in which the character area is positioned.

Each set of consecutive columns may be identified to be one character area and *b* sets of consecutive columns are identified to be *b* character areas. In Fig. 6E, 18 character areas can be identified.

When there are *a* rows of character areas, the steps 701 and 705 are performed one time for each row of character areas, thus being performed totally *a* times.

For each identified character area, the characters contained in the character area can be identified through character recognition technology. The characters may be Chinese characters, English letters, numbers or single characters in other languages.

In summary, in the method for area identification according to the embodiment of the invention, by binarizing the information area, calculating a first histogram of the binarized information area in a horizontal direction, determining *a* rows of character areas in the information area, calculating a second histogram of the *a* rows of character areas in a vertical direction, and identifying the character area to which each character corresponds, the accuracy of identifying the character areas in the information area can be improved.

Below are apparatus embodiments of the invention which may be used to perform the method embodiments of the invention. For the details not cited in the apparatus embodiments, please see the method embodiments of the invention.

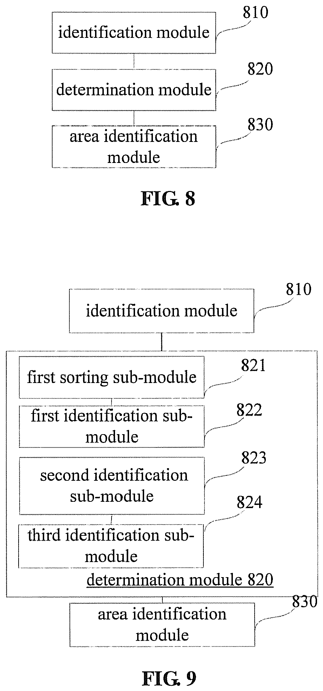

Fig. 8 is a block diagram illustrating an apparatus for area identification according to an exemplary embodiment. As shown in Fig. 8, the apparatus comprises but is not limited to the followings.

An identification module 810 is configured to identify n predefined edge candidates each corresponding to a predefined edge in an image of an identification, wherein the predefined edge is an edge in a predefined direction of the identification and *n≥*2.

The image of the identification may be an image obtained directly by photographing the identification, such as an image of an identity card, an image of a social security card and the like.

The predefined edge may be any one of upper edge, lower edge, left edge and right edge of the identification.

A determination module 820 is configured to determine one of *n* predefined edge candidates to be a target predefined edge when the *n* predefined edge candidates have been identified.

When *n≥*2, the determination module 820 is configured to determine one of *n* predefined edge candidates to be the target predefined edge of the identification in the image of the identification.

The target predefined edge can be regarded as the real predefined edge, the correct predefined edge or the predefined edge of high accuracy.

An area identification module 830 is configured to identify at least one information area in the image of the identification based on the target predefined edge.

The information area refers to the area carrying character information in the image of the identification, such as at least one of name information area, date of birth information area, gender information area, address information area, civil identity number information area, serial number information area, issuance office of the identification information area, valid date information area and the like.

In summary, in the method for area identification according to the embodiment of the invention, by identifying *n* predefined edge candidates each corresponding to a predefined edge in an image of an identification, wherein the predefined edge is an edge positioned on a predefined direction of the identification and *n*≥2; determine one of *n* predefined edge candidates to be a target predefined edge when the *n* predefined edge candidates have been identified; and identifying at least one information area in the image of the identification based on the target predefined edge, the problems in the related arts wherein it is difficult to identify some information areas in the image of the identification obtained directly by photographing and that the positions of some information areas are inaccurate can be solved, and the effect of positioning the information areas accurately by determining the target predefined edge based on the *n* predefined edge candidates in the image of the identification and determining at least one information based on the target predefined edge can be achieved.

In a particular embodiment based on the embodiment as shown in Fig. 8, the determination module 820 may comprise the following sub-modules, as shown in Fig. 9.

A first sorting sub-module 821 is configured to sort the *n* predefined edge candidates.

Upon being obtained, the *n* predefined edge candidates are sorted by the first sorting sub-module 821 based on the possibility that the *n* predefined edge candidates are the target predefined edge in a descending order.

A first identification sub-module 822 is configured to attempt to identify a target information area in the image of the identification using the *i^{th}* predefined edge candidate and a first relative position relation, wherein 1≤*i*≤*n.*

Assuming the *i^{th}* predefined edge candidate is the target predefined edge, the first identification sub-module 822 tries to use the *i^{th}* predefined edge candidate to identify the target information area. If the target information area is identified successfully, the *i^{th}* predefined edge candidate is determined to be the target predefined edge. If the target information area is not identified, the *i^{th}* predefined edge candidate is determined not to be the target predefined edge.

In the step that assuming the *i^{th}* predefined edge candidate is the target predefined edge, the first identification sub-module 822 attempts to use the *i^{th}* predefined edge candidate to identify the target information area, the predefined edges sorted in the first sorting sub-module 821 are tried one by one.

The first relative position relation is a relative position relation between the target predefined edge and the target information area.

A second identification sub-module 823 is configured to determine the *i^{th}* predefined edge candidate to be the target predefined edge if the target information area is successfully identified.

If the target information area in the image of the identification is successfully identified by the first identification sub-module 822 based on the *i^{th}* predefined edge candidate and the first relative position relation, the second identification sub-module 823 is configured to determine the *i^{th}* predefined edge candidate to be the target predefined edge.

A third identification sub-module 824 is configured to set *i* to *i*+1 and return to the first identification sub-module 822 to perform the functionality of the first identification sub-module 822 if the target information area is not identified.

In a particular embodiment, the area identification module 830 is further configured to determine at least one information area based on the target predefined edge and a second relative position relation. The second relative position relation is a relative position relation between the target predefined edge and the information area.

In summary, in the method for area identification according to the embodiment of the invention, by identifying *n* predefined edge candidates each corresponding to a predefined edge in an image of an identification, wherein the predefined edge is an edge positioned on a predefined direction of the identification; sorting the *n* predefined edge candidates; attempting to identify a target information area in the image of the identification using the *i^{th}* predefined edge candidate and a first relative position relation, wherein 1≤i≤n, and wherein the first relative position relation is a relative position relation between the target predefined edge and the target information area; and identifying at least one information area in the image of the identification based on the target predefined edge, it can be solved the problems in the related arts wherein it is difficult to identify some information areas in the image of the identification obtained directly by photographing and that the positions of some information areas are inaccurate, and it can be achieved the effect of positioning the information areas accurately by determining the target predefined edge based on the *n* predefined edge candidates in the image of the identification and determining at least one information based on the target predefined edge.

Meanwhile, by sorting the *n* predefined edge candidates, the effect of increasing the speed of determining the target predefined edge and accurately positioning the target predefined edge can be achieved.

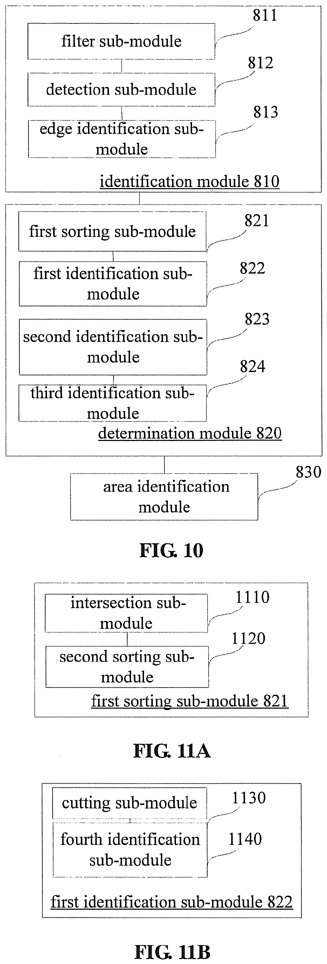

In a particular embodiment based on the embodiment as shown in Fig. 9, the identification module 810 may comprise the following sub-modules, as shown in Fig. 10.

A filter sub-module 811 is configured to subject the image of the identification to Sobel horizontal filter and binarization to obtain a processed image of the identification.

The binarization refers to comparing the gray values of the pixel points in the image of the identification with a predefined gray threshold and dividing the pixel points in the image of the identification into two groups: a group of pixel points whose gray values are greater than the predefined gray threshold and a group of pixel points whose gray values are less than the predefined gray threshold. The two groups of pixel points are presented with two different colors of black and white in the image of the identification, thus obtaining the binarized image of the identification.

A detection sub-module 812 is configured to conduct a straight line detection to a predefined area in the processed image of the identification to obtain at least one straight line.

The predefined area may be an area in a predefined direction of the identification.

Upon obtaining the processed image of the identification by the filter sub-module 811, the detection sub-module 812 conducts the straight line detection, including straight line fitting or Hough transformation, to the processed image of the identification so as to obtain at least one line.

An edge identification sub-module 813 is configured to identify, when *n* lines are obtained, the *n* lines to be *n* predefined edge candidates, wherein *n*≥2.

When only one line is obtained, this line is identified to be the target predefined edge in the image of the identification, and the flow proceeds to perform the functionality of the area identification module 830.

In summary, in the method for area identification according to the embodiment of the invention, by subjecting the image of the identification to Sobel horizontal filter and binarization to obtain the processed image of the identification, conducting a straight line detection to a predefined area in the processed image of the identification to obtain at least one line, and identifying the *n* lines to be the *n* predefined edge candidates, the detection of the target predefined edge in the image of the identification is more accurate and the accuracy of later identification for the information area can be improved.

In a particular embodiment based on the embodiment as shown in Fig. 9, the first sorting sub-module 821 may comprise the following sub-modules, as shown in Fig. 11A.

An intersection sub-module 1110 is configured to intersect the predefined edge candidate with pixel points of a foreground color at the same position in the processed image of the identification for each predefined edge candidate, to obtain the number of intersection points corresponding to the predefined edge candidate.

The processed image of the identification is an image processed by the filter sub-module 811.

Upon obtaining the n predefined edge candidates by the edge identification sub-module 813, the image of the identification is horizontally filtered by Sobel filter firstly, that is to say, the image of the identification is filtered with a Sobel operator in a horizontal direction. Then, the filtered image of the identification is binarized.

Intersecting the predefined edge with pixel points of foreground color at the same position in the processed image of the identification for each predefined edge candidate by the intersection sub-module 1110 is to calculate the number of pixel points of each predefined edge candidate which belong to the foreground color at the same position in the binarized image of the identification.

A second sorting sub-module 1120 is configured to sort the *n* predefined edge candidates based on the number of the intersection points in a descending order.

Upon obtaining the number of the corresponding intersection points for each predefined edge candidate by the intersection sub-module 1110, the second sorting sub-module 1120 sorts the *n* predefined edge candidates based on the number of the intersection points in a descending order to obtain the *n* sorted predefined edge candidates.

In summary, in the method for area identification according to the embodiment of the invention, by sorting the *n* predefined edge candidates, the speed of determining the target predefined edge can be increased, the accurate positioning of the target predefined edge can be facilitated and the accuracy of later identification for the information area can be improved.

In a particular embodiment based on the embodiment as shown in Fig. 9, the first identification sub-module 822 may comprise the following sub-modules, as shown in Fig. 11B.

A cropping sub-module 1130 is configured to crop an area of interest in the image of the identification using the *i^{th}* predefined edge candidate and the first relative position relation.

Based on the *i^{th}* predefined edge candidate and the first relative position relation, the rough positions of the upper edge, lower edge, left edge and right edge of the area of interest can be determined. Therefore, the cropping sub-module 1130 can crop the area of interest in the image of the identification based on the determined upper edge, lower edge, left edge and right edge of the area of interest.

The area of interest refers to an area determined based on the *i^{th}* predefined edge candidate and the first relative position relation.

A fourth identification sub-module 1140 is configured to identify whether there is a character area satisfying predefined characteristics in the area of interest, wherein the predefined characteristics are the characteristics possessed by the character area in the target information area.

Upon cropping the area of interest by the cropping sub-module 1130, the fourth identification sub-module 1140 identify whether there is a character area satisfying predefined characteristics in the area of interest based on the predefined characteristics.

The predefined characteristics are the characteristics possessed by the character area in the target information area.

In summary, in the method for area identification according to the embodiment of the invention, by cropping an area of interest in the image of the identification using the *i^{th}* predefined edge candidate and the first relative position relation, the speed of determining the target predefined edge can be increased, the accurate positioning of the target predefined edge can be facilitated and the accuracy of later identification for the information area can be improved.

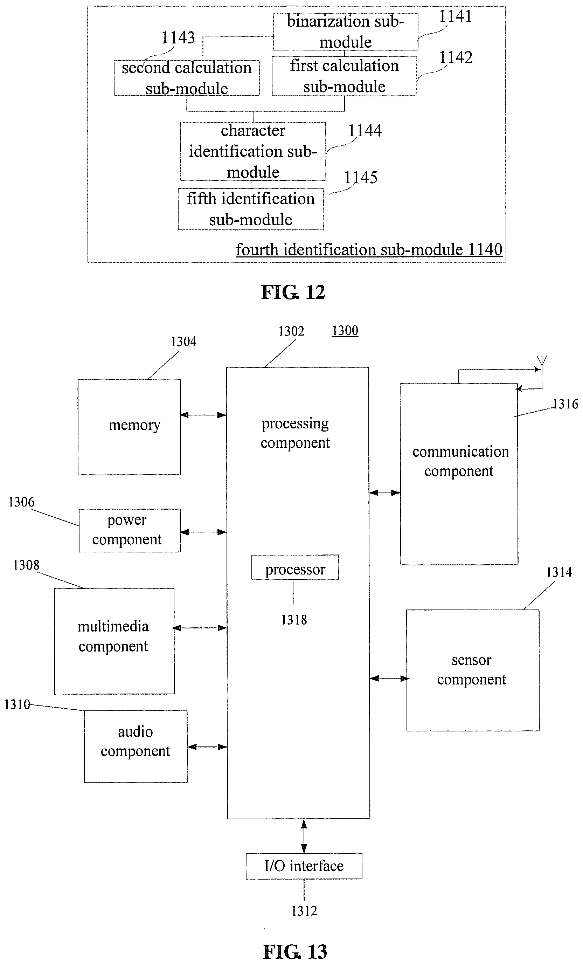

In a particular embodiment based on the embodiment as shown in Fig. 11B, the fourth identification sub-module 1140 may comprise the following sub-modules, as shown in Fig. 12.

A binarization sub-module 1141 is configured to binarize the area of interest to obtain the binarized area of interest.

Taking the area of interest being the civil identity number area as an example, the binarization sub-module 1141 may pre-process the area of interest. The pre-process may include operations such as de-noising, filtering, edges extraction and so on. The pre-processed area of interest may be binarized.

A first calculation sub-module 1142 is configured to calculate a first histogram of the binarized area of interest in a horizontal direction, wherein the first histogram comprises the vertical coordinates of the pixel points in each row and the number of pixel points of the foreground color in the pixel points in each row.

The first calculation sub-module 1142 calculates the first histogram of the area of interest processed by the binarization sub-module 1141 in a horizontal direction, wherein the first histogram represents the vertical coordinates of the pixel points in each row on the vertical direction and the number of pixel points of the foreground color in the pixel points in each row on the horizontal direction.

A second calculation sub-module 1143 configured to calculate a second histogram of the binarized area of interest in a vertical direction, wherein the second histogram comprises the horizontal coordinates of the pixel points in each column and the number of pixel points of the foreground color in the pixel points in each column.

The second calculation sub-module 1143 calculates the second histogram of the area of interest processed by the binarization sub-module 1141 on vertical direction, wherein the second histogram represents the horizontal coordinates of the pixel points in each column on the horizontal direction and the number of pixel points of the foreground color in the pixel points in each column on the vertical direction.

A character identification sub-module 1144 is configured to determine that the character area satisfying predefined characteristics is successfully identified in the area of interest if the height of the set of consecutive rows composed of the rows of which the numbers of pixel points of the foreground color in the first histogram are greater than a first threshold satisfies a predefined height range, and the number of the sets of consecutive columns composed of the columns of which the numbers of pixel points of the foreground color in the second histogram are greater than a second threshold satisfies a predefined condition.

The number of pixel points of the foreground color in the pixel points of each row can be obtained based on the first histogram. By comparing the number of pixel points of the foreground color in the pixel points of each row with the first threshold, the character identification sub-module 1144 can obtain the height of the set of consecutive rows composed of the rows of which the numbers of pixel points of the foreground color in the first histogram are greater than the first threshold.

The set of consecutive rows refers to the set of *m* consecutive rows of pixel points of which the numbers of pixel points of the foreground color are greater than the first threshold.

The number of pixel points of the foreground color in the pixel points of each column can be obtained based on the second histogram. By comparing the number of pixel points of the foreground color in the pixel points of each column with the second threshold, the character identification sub-module 1144 can obtain the number of the sets of consecutive columns composed of the columns of which the numbers of pixel points of the foreground color in the second histogram are greater than the second threshold.

The set of consecutive columns refers to the set of p consecutive columns of pixel points of which the numbers of pixel points of the foreground color are greater than the second threshold.

A fifth identification sub-module 1145 is configured to determine that the character area satisfying predefined characteristics is not identified in the area of interest if the height of the set of consecutive rows composed of the rows of which the numbers of pixel points of the foreground color in the first histogram are greater than the first threshold does not satisfy the predefined height range, or the number of the sets of consecutive columns composed of the columns of which the numbers of pixel points of the foreground color in the second histogram are greater than the second threshold does not satisfy the predefined condition.

When the height of the set of consecutive rows does not satisfy the predefined height range, or the number of the sets of consecutive columns does not satisfy the predefined condition, the fifth identification sub-module 1145 determines that the character area satisfying predefined characteristics is not identified in the area of interest.

In summary, in the method for area identification according to the embodiment of the invention, by binarizing the area of interest, calculating a first histogram and a second histogram of the binarized area of interest on horizontal direction and vertical direction respectively, determining whether the character area satisfying predefined characteristics is identified based on the height of the set of consecutive rows in the first histogram and the number of the sets of consecutive columns in the second histogram, the positioning of the character area can be more accurate.

An exemplary embodiment of the present invention provides an apparatus for area identification which can implement the method for area identification provided in the present invention. The apparatus comprises: a processor; and a memory for storing processor-executable instructions, wherein the processor is configured to: identify a predefined edge in an image of an identification, wherein the predefined edge is an edge positioned on a predefined direction of the identification and *n*≥2; determine one of *n* predefined edge candidates to be a target predefined edge when the *n* predefined edge candidates have been identified; and identify at least one information area in the image of the identification based on the target predefined edge.

With respect to the apparatus in the above embodiments, the specific manners that the respective modules perform operations have been described in detail in the embodiments regarding the relevant methods, and will not be elaborated herein.

Fig. 13 is a block diagram of an apparatus for area identification according to an exemplary embodiment. For example, the apparatus 1300 may be a mobile phone, a computer, a digital broadcast terminal, a messaging device, a gaming console, a tablet, a medical device, exercise equipment, a personal digital assistant, and the like.

Referring to Fig. 13, the apparatus 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the apparatus 1300, such as the operations associated with display, telephone calls, data communications, camera operations, and recording operations. The processing component 1302 may include one or more processors 1318 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the apparatus 1300. Examples of such data include instructions for any applications or methods operated on the apparatus 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the apparatus 1300. The power component 1306 may include a power management system, one or more power sources, and any other components associated with the generation, management, and distribution of power for the apparatus 1300.

The multimedia component 1308 includes a screen providing an output interface between the apparatus 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and the rear camera may receive an external multimedia datum while the apparatus 1300 is in an operation mode, such as a photographing mode or a video mode. Each of the front camera and the rear camera may be a fixed optical lens system or have optical focusing and zooming capability.

The audio component 1310 is configured to output and/or input audio signals. For example, the audio component 1310 includes a microphone ("MIC") configured to receive an external audio signal when the apparatus 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, the peripheral interface modules being, for example, a keyboard, a click wheel, buttons, and the like. The buttons may include, but are not limited to, a home button, a volume button, a starting button, and a locking button.

The sensor component 1314 includes one or more sensors to provide status assessments of various aspects of the apparatus 1300. For instance, the sensor component 1314 may detect an open/closed status of the apparatus 1300, relative positioning of components (e.g., the display and the keypad, of the apparatus 1300), a change in position of the apparatus 1300 or a component of the apparatus 1300, a presence or absence of user contact with the apparatus 1300, an orientation or an acceleration/deceleration of the apparatus 1300, and a change in temperature of the apparatus 1300. The sensor component 1314 may include a proximity sensor configured to detect the presence of a nearby object without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the apparatus 1300 and other devices. The apparatus 1300 can access a wireless network based on a communication standard, such as WiFi, 2G, or 3G, or a combination thereof. In an exemplary embodiment, the communication component 1316 receives a broadcast signal or broadcast associated information from an external broadcast management system via a broadcast channel. In an exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1304, executable by the processor 1318 in the apparatus 1300, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the inventions herein. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for area identification, **characterized in that** it comprises:
identifying (102) *n* predefined edge candidates each corresponding to a predefined edge in an image of an identification, wherein the predefined edge is an edge in a predefined direction of the identification, and *n*≥2;
determining (104) one of the *n* predefined edge candidates to be a target predefined edge when the *n* predefined edge candidates have been identified; and
identifying (106) at least one information area in the image of the identification based on the target predefined edge.

2. The method of claim 1, wherein determining (104) one of the *n* predefined edge candidates to be the target predefined edge when the *n* predefined edge candidates have been identified comprises:
sorting (204) the *n* predefined edge candidates;
attempting (206) to identify a target information area in the image of the identification using the *i^{th}* predefined edge candidate and a first relative position relation, wherein 1≤*i*≤*n*, and wherein the first relative position relation is a relative position relation between the target predefined edge and the target information area;
determining (208) the *i^{th}* predefined edge candidate to be the target predefined edge if the target information area is successfully identified; and
setting (210) *i* to *i*+1 and repeating the step of attempting to identify the target information area in the image of the identification using the *i^{th}* predefined edge candidate and the first relative position relation, if the target information area is not identified.

3. The method of claim 2, wherein sorting (204) the *n* predefined edge candidates comprises:
intersecting (204a) the predefined edge candidate with pixel points of a foreground color at the same position in a processed image of the identification for each predefined edge candidate, to obtain a number of intersection points corresponding to the predefined edge candidate, wherein the processed image of the identification is the image subjected to Sobel horizontal filter and binarization; and
sorting (204b) the *n* predefined edge candidates based on the number of the intersection points in a descending order.

4. The method of claim 2, wherein attempting (206) to identify the target information area in the image of the identification using the *i^{th}* predefined edge candidate and the first relative position relation comprises:
cropping (206a) an area of interest in the image of the identification using the *i^{th}* predefined edge candidate and the first relative position relation; and
identifying (206b) in the area of interest whether there is a character area satisfying predefined characteristics, wherein the predefined characteristics are the characteristics possessed by the character area in the target information area.

5. The method of claim 4, wherein identifying (206b) in the area of interest whether there is a character area satisfying predefined characteristics comprises:
binarizing (301) the area of interest to obtain a binarized area of interest;
calculating (302) a first histogram for the binarized area of interest in a horizontal direction, wherein the first histogram comprises vertical coordinates of the pixel points in each row and the number of pixel points of the foreground color in the pixel points in each row;
calculating (303) a second histogram for the binarized area of interest in a vertical direction, wherein the second histogram comprises horizontal coordinates of the pixel points in each column and the number of pixel points of the foreground color in the pixel points in each column;
wherein if a height of a set of consecutive rows composed of the rows of which the numbers of pixel points of the foreground color in the first histogram are greater than a first threshold satisfies a predefined height range, and the number of the sets of consecutive columns composed of the columns of which the numbers of pixel points of the foreground color in the second histogram are greater than a second threshold satisfies a predefined condition, it is determined (304) that the character area satisfying predefined characteristics is identified successfully in the area of interest; and
if the height of the set of consecutive rows composed of the rows of which the numbers of pixel points of the foreground color in the first histogram are greater than the first threshold does not satisfy the predefined height range, or the number of the sets of consecutive columns composed of the columns of which the numbers of pixel points of the foreground color in the second histogram are greater than the second threshold does not satisfy the predefined condition, it is determined (305) that the character area satisfying predefined characteristics is not identified in the area of interest.

6. The method of any one of claims 1-5, wherein identifying (102) n predefined edge candidates each corresponding to the predefined edge in the image of the identification comprises:
subjecting (202a) the image of the identification to a Sobel horizontal filter and binarization to obtain a processed image of the identification;
conducting (202b) a straight line detection to a predefined area in the processed image of the identification to obtain at least one straight line; and
identifying (202c), when *n* straight lines are obtained, the *n* straight lines to be the *n* predefined edge candidates, wherein *n*≥2.

7. The method of any one of claims 1-5, wherein the step (106) of identifying at least one information area in the image of the identification based on the target predefined edge comprises:
determining (212) at least one information area based on the target predefined edge and a second relative position relation, wherein the second relative position relation is a relative position relation between the target predefined edge and the information area.

8. A device for area identification, **characterized in that** it comprises:
an identification module (810) configured to identify *n* predefined edge candidates each corresponding to a predefined edge in an image of an identification, wherein the predefined edge is an edge in a predefined direction of the identification and *n*≥2);
a determination module (820) configured to determine one of *n* predefined edge candidates to be a target predefined edge when the *n* predefined edge candidates have been identified; and
an area identification module (830) configured to identify at least one information area in the image of the identification based on the target predefined edge.

9. The device of claim 8, wherein the determination module (820) comprises:
a first sorting sub-module (821) configured to sort the *n* predefined edge candidates;
a first identification sub-module (822) configured to attempt to identify a target information area in the image of the identification using the *i^{th}* predefined edge candidate and a first relative position relation, wherein 1≤*i*≤*n*, and wherein the first relative position relation is a relative position relation between the target predefined edge and the target information area;
a second identification sub-module (823) configured to determine the *i^{th}* predefined edge candidate to be the target predefined edge if the target information area is successfully identified; and
a third identification sub-module (824) configured to set *i* to *i*+1 and return to the first identification sub-module if the target information area is not identified..

10. The device of claim 9, wherein the first sorting sub-module (821) comprises:
an intersection sub-module (1110) configured to intersect the predefined edge candidate with pixel points of a foreground color at the same position in a processed identification image for each predefined edge candidate, to obtain a number of intersection points corresponding to the predefined edge candidate, wherein the processed image of the identification is the image subjected to Sobel horizontal filter and binarization; and
a second sorting sub-module (1120) configured to sort the *n* predefined edge candidates based on the number of the intersection points in a descending order.

11. The device of claim 9, wherein the first identification sub-module (822) comprises:
a cropping sub-module (1130) configured to crop an area of interest in the image of the identification using the *i^{th}* predefined edge candidate and the first relative position relation; and
a fourth identification sub-module (1140) configured to identify in the area of interest whether there is a character area satisfying predefined characteristics, wherein the predefined characteristics are the characteristics possessed by the character area in the target information area.

12. The device of claim 11, wherein the fourth identification sub-module (1140) comprises:
a binarization sub-module (1141) configured to binarize the area of interest to obtain a binarized area of interest;
a first calculation sub-module (1142) configured to calculate a first histogram for the binarized area of interest in a horizontal direction, wherein the first histogram comprises vertical coordinates of the pixel points in each row and the number of pixel points of the foreground color in the pixel points in each row;
a second calculation sub-module (1143) configured to calculate a second histogram for the binarized area of interest in a vertical direction, wherein the second histogram comprises horizontal coordinates of the pixel points in each column and the number of pixel points of the foreground color in the pixel points in each column;
a character identification sub-module (1144) configured to determine that the character area satisfying predefined characteristics is identified successfully in the area of interest, if a height of a set of consecutive rows composed of the rows of which the numbers of pixel points of the foreground color in the first histogram are greater than a first threshold satisfies a predefined height range, and the number of the sets of consecutive columns composed of the columns of which the numbers of pixel points of the foreground color in the second histogram are greater than a second threshold satisfies a predefined condition; and
a fifth identification sub-module (1145) configured to determine that the character area satisfying predefined characteristics is not identified in the area of interest, if the height of the set of consecutive rows composed of the rows of which the numbers of pixel points of the foreground color in the first histogram are greater than the first threshold does not satisfy the predefined height range, or the number of the sets of consecutive columns composed of the columns of which the numbers of pixel points of the foreground color in the second histogram are greater than the second threshold does not satisfy the predefined condition.

13. The device of any one of claims 8-12, wherein the identification module (810) comprises:
a filter sub-module (811) configured to subject the image of the identification to a Sobel horizontal filter and binarization to obtain a processed image of the identification;
a detection sub-module (812) configured to conduct a straight line detection to a predefined area in the processed image of the identification to obtain at least one straight line; and
an edge identification sub-module (813) configured to identify, when *n* straight lines are obtained, the *n* lines to be *n* predefined edge candidates, wherein *n*≥2.

14. The device of any one of claims 8-12, wherein,
the area identification module (830) is configured to determine at least one information area based on the target predefined edge and a second relative position relation, wherein the second relative position relation is a relative position relation between the target predefined edge and the information area.

15. A computer program including instructions for executing the steps of a method for area identification to any one of claims 1 to 7 when said program is executed by a computer.
